# EUROPEAN PATENT SPECIFICATION

(11) **EP 0 507 090 B1**
(45) Date of publication and mention of the grant of the patent: **09.10.1996**
(21) Application number: 92103636.4
(22) Date of filing: 03.03.1992
(51) Int. Cl.: H01M 2/16, H01M 4/14, H01M 4/62, H01M 10/12, H01M 10/06

(54) **Lead/sulphuric acid storage battery**
Blei/Schwefelsäure-Akkumulator
Accumulateur de plomb/d'acide sulfurique

(30) Priority: 09.03.1991 DE 4108176; 18.03.1991 US 663213
(43) Date of publication of application: 07.10.1992
(73) Proprietor: DARAMIC, INC., North Charleston, SC 29406 (US)
(72) Inventor: Böhnstedt, Werner, Dr., W-2359 Henstedt-Ulzburg 3 (DE); Radel, Christian, W-6643 Freigericht 1 (DE); Kung, James Koang-Jaw, Lexington, MA 02173 (US); Choi, Wain Ming, West Newton, MA 02165 (US)
(74) Representative: UEXKÜLL & STOLBERG

(56) References cited:
- DATABASE WPI, accession no. 75-04864W [03], Derwent Publications Ltd, London, GB; & JP-B-74 047 649 (JAPAN STORAGE BATTERY CO.) 17-12-1974
- DATABASE WPI, accession no. 80-63457C [36], Derwent Publications Ltd, London, GB; & JP-A-50 116 920 (SHIN KOBE) 12-09-1975
- JOURNAL OF APPLIED ELECTROCHEMISTRY, vol. 16, 1986, pages 879-884, London, GB; A.A. JENKINS et al.: "Antimony in lead-acid cells. III. Transport measurements"
- JOURNAL OF THE ELECTROCHEMICAL SOCIETY: ELECTROCHEMICAL SCIENCE AND TECHNOLOGY, vol. 121, no. 12, December 1974, pages 1541-1545, Manchester, NH, US; J.L. WEININGER et al.: "Polymer-bonded negative electrodes for lead-acid batteries"
- CHEMICAL ABSTRACTS, vol. 113, no. 8, 20th August 1990, page 203, abstract no. 62657e, Columbus, Ohio, US; & JP-A-2 106 870 (NIPPON) 18-04-1990

## Description

The present invention relates to lead/sulphuric acid storage batteries, especially deep cycle batteries which are less susceptible to antimony poisoning. More particularly, the present invention relates to a battery separator for use in traction batteries, such as golf cart batteries.

Lead alloys with a relatively high antimony content (currently approximately 4 to 10 wt-% Sb) are used as casting material for the electrodes of lead batteries for cyclical stresses. Lead/antimony alloys have advantages both during the manufacturing process of the electrode frames (improvement of the flow characteristics of the molten metal in the moulds, greater hardness of the cast electrode frame) and during use of the battery; particularly in the case of cyclical loads, a good contact between terminal and active material is constantly ensured at the positive electrode in addition to mechanical stability, so that a premature drop in capacity does not occur ("antimony-free" effect).

However, antimony-containing positive electrodes have the disadvantage that antimony is dissolved ionically, migrates through the separator and, because it is nobler than lead, is deposited on the negative electrode. This process is described as antimony poisoning. Through a reduction of the overvoltage for hydrogen, it leads to increased water consumption and thus requires more maintenance. Attempts have already been made to completely or partially replace the antimony in the lead alloy with other alloy components, which, however, has not led to satisfactory results.

For the electrical separation of the positive from the negative electrode plates in storage batteries, porous separators are used which are arranged between the plates. In deep cycle batteries the most varied materials have already been tried and used as separators, but until now no system has been able to meet all requirements with the same degree of satisfaction. The problem of antimony poisoning in particular has not yet been satisfactorily solved; reducing or delaying the thus-caused effects could considerably lengthen the life of batteries.

Battery separators made from rubber are known. In German patent 414 975 a rubber membrane made from latex is described. Like all natural substances (previously, even wooden separators were used for example), this system has only insufficient chemical stability vis-à-vis sulphuric acid and oxidative attacks, so that the necessary battery life is not reached.

A more recent version of a flexible rubber separator is described in US patent 4 213 815. Here a mixture of natural rubber and copolymers, pore-formers and auxiliary agents is laminated onto a macroporous fleece, and the polymer mixture is then partially crosslinked by electron beams. In addition to the only low chemical stability vis-à-vis sulphuric acid and oxidative attack, this separator is over-flexible, so that it cannot give the necessary support to the negative electrode mass to prevent overexpansion in cyclically charged cells.

Improved chemical stability and more efficient support of the negative electrode mass is achieved by using porous hard-rubber separators. Such separators are described for example in German published applications 1 496 343 and 1 596 296. For process-related reasons, hard-rubber separators can only be manufactured with comparatively low porosity and thus display high electrical resistance for the necessary ion stream in the battery. Moreover, as a result of the vulcanization, the hard-rubber structure filled with silica becomes brittle, so that incorporation into the cell proves very difficult.

To improve this situation, it has been proposed to laminate hard-rubber separators to a woven or non-woven material. German published application 29 24 239 describes for example the lamination of a filled, vulcanized rubber layer to a polyester fleece, thus producing in turn separators with comparatively high electrical resistance or, if sheets of very thin thickness are produced, giving rise to cracks due to the brittleness of the hard-rubber and a lack of support effect.

A similar embodiment is known from German published application 30 05 297 in which the microporous separator is provided with a glass-wool fleece on the side facing the negative plate. In addition to an increase in the electrical resistance, the danger exists with such separators that charging gases will accumulate in the glass-wool fleece and thus trigger off a series of undesired secondary reactions. This problem is even more pronounced if the entire space between the electrodes is filled, as is proposed for example in German patent 944 440. Here a glass-fiber fleece is processed with a paste made of mineral substances and rubber as binding agent to produce a separator.

From Japanese published application 49-47649 it is known to prepare battery separators from natural or synthetic rubber and a pore forming agent which is extracted after vulcanization of the rubber. The porous sheet is then treated with a mixture of acid resistant synthetic resin and rubber. The coating formed after drying is chemically treated with concentrated sulphuric acid at 30 to 50°C for several hours in order to form ion exchange groups serving to increase the holding capacity of the separator for concentrated sulphuric acid.

Nowadays, separators based on thermoplastic or thermosetting plastics are predominantly used as separators for lead/lead dioxide batteries with cyclical stress. Especially widely used is a separator which consists of high-molecular-weight polyethylene containing as pore formers silica and a mineral oil, cf. German patent 1 496 123. A likewise extensively used microporous separator made of a thermoset resin is proposed in German patent 1 596 109. Moreover, there are other separators based on polyvinyl chloride or mixtures of other polymers and also with and without pore forming fillers. For applications with average cyclical loads, separators based on glass-fibers are also used. All these separators made of synthetic plastics or glass-fibers have the characteristic that they have little or no effect on the chemical reaction sequences in a battery - also not an advantageous one, e.g. delaying the antimony poisoning. On the other hand their chemical stability and their low electrical resistance are very advantageous.

It has been shown that the processes connected to antimony poisoning can be influenced by separators; however, the mechanism of their influence is unknown and the wooden or hard-rubber separators considered in this context display other serious disadvantages, as previously mentioned.

Previous theories and proposals predominantly assume a capture mechanism on the basis of a chemical reaction with the antimony. Thus, inorganic powder of or containing metal oxide having rutile-type structure (Japanese published application 02-106870), sulphur (Japanese published application 60-250 566) or organic sulphur compounds including hard-rubber (German published application 31 11 473), resins with aminophosphonic groups (French patent 2 440 085), tannic acid, sodium alizarin sulphonate, salicylic acid, p-cresol, resorcinol, pyrogallol, hydroquinone, catechol et al. (Japanese published application 55-080 267), ethylene diamine tetraacetic acid (EDTA) (Japanese published application 54-156 139), polymethacrylic acid and polyvinyl alcohol (German published application 2 755 319), cross-linked polyhydroxy ethyl methacrylate combined with other polymers (German published application 2 755 256) or even polyethylene oxide (US patent 3 518 124) have been proposed as suitable additives. This list by no means claims to be exhaustive; however, it must be stated that none of these proposals has found acceptance because the effect was either too small or not maintained for a sufficiently long time.

Other proposals for delaying the antimony poisoning with the aid of separators are based on physical interactions: Japanese published application 50-12 537 attributes the effect to low average pore diameter, although there are many examples demonstrating the opposite. German published application 32 22 361 claims an enlargement of the inner surface of the separator by coating or detaching soluble constituents, to increase the adsorption capacity for antimony ions. The thus achievable delay in the antimony poisoning can, however, not justify the costly production procedure.

Another problem is known as "the top of charge" or "top of voltage" phenomenon. The typical battery charger used for traction batteries has no battery temperature or current sensor for determining when the battery is completely recharged. Rather, it is a simple device which supplies a high voltage to a battery until the operator or a timer causes the device to stop supplying the voltage. In some instances, the charger does not stop supplying the voltage before the battery is completely charged, thus causing the battery to become overcharged. This tends to occur more frequently as the age of the battery becomes greater. During an overcharge situation, the components of the battery, in particular the plates and the separators, become subjected to high temperatures which increase their susceptibility to oxidation or "burning" and thereby shorten the battery's life.

It is an object of the invention to achieve a clear increase in the cycle life in the case of a lead/sulphuric acid battery, particularly for cyclical conditions of use, by considerably delaying the antimony poisoning and avoiding the overcharge problem, without having to switch to battery separators, which, compared to the currently employed plastics separators, do not display low electrical resistance, low acid displacement or a good support effect on the negative electrode.

To achieve this object it is proposed to use a porous layer of un-crosslinked natural or un-crosslinked synthetic rubber having a thickness of not less than 0.05 mm in a lead/sulphuric acid storage battery with negative and positive electrode plates between which separators made of a material selected from the group comprising microporous plastics, glass-fibers, cellulosic sheets or a combination of microporous plastics or cellulosic sheets with glass fibers are arranged. According to one preferred embodiment of the invention the separator of microporous plastics or glass fibers or of glass fibers laminated to a microporous plastics sheet can be provided on either or both surfaces with a layer comprising the rubber. The rubber-containing layer is preferably provided on the side of the separator facing the negative electrode plate.

On the other hand it is also possible to incorporate the un-crosslinked rubber in the separator sheet or a layer thereof, or in the negative electrode plate. Another embodiment involves depositing the rubber as a coating onto the inner walls of the battery box.

It has surprisingly been found that these measures considerably delay the antimony poisoning, without other disadvantages having to be accepted, because plastics separators or glass-fiber separators can be used with all their known advantageous characteristics. This particularly applies also if the battery separator is provided with an extremely thin layer of the un-crosslinked rubber. This combination avoids the disadvantage of the short life of un-crosslinked rubber separators due to their lack of chemical resistance. Furthermore, the layer can be applied very thinly so that neither electrical resistance nor acid displacement are excessively increased, because the conventional microporous separator assumes the support function and, because of its mechanical stability, also exerts a sufficient support effect on the negative electrode against overexpansion. Rubber layers with a thickness of 0,05 to 0.6 mm and particularly 0.2 to 0.4 mm have proved suitable.

At present it is not yet possible to fully explain the success of the invention. Contrary to earlier assumptions, any sulphur content is clearly not decisive because comparative tests have shown that the antimony poisoning can be only slightly delayed by adding sulphur containing vulcanized rubber.

Suited as rubber are, in addition to natural rubber (e.g. commercial products such as Neotex 4/404, Neotex Type 15, Neotex P6, Neotex LN, Neotex ISV and Neotex DC from Weber & Schaer, Hamburg) also the known synthetic rubbers such as methyl rubber, polybutadiene, chloropene rubbers and copolymer rubbers. The latter include styrene/butadiene rubbers, acrylonitrile/butadiene rubbers, ethylene/propylene rubbers (EPM and EPDM) and ethylene/vinyl acetate rubbers. Further to be mentioned are butyl rubber, bromobutyl rubber, polyurethane rubber, epichlorhydrin rubber, polysulphide rubber, chlorosulphonyl polyethylene, polynorbornene rubber, acrylate rubber, fluorine rubber and silicone rubber.

The separator can be formed of any microporous sheet material. Preferably, the base web is formed of a microporous material that is inert in a lead/acid battery environment. Moreover, it should be fairly stiff as one requirement of the separator is to maintain a constant pressure against the active materials, especially on the positive plates, thereby keeping the materials in place. The base web may be flat or have series of ribs formed upon one or both of its surfaces. Such ribs and their formation are well known in the art. Ribs may be formed separately on a flat sheet by extruding a PVC plastisol or a hot melt polyolefin material in narrow strips onto the flat sheet's surface. Alternatively, the ribs may be formed during the formation of the base web by calendaring, embossing or molding.

The selected base web should have a backweb thickness of from about 250 to about 1250 µm and most preferably about 500 µm. By backweb thickness it is meant the thickness of the separator excluding the thickness of any ribs. The average pore size should be less than 10 µm, preferably less than 7 µm, more preferably less than about 5 µm. The base web should have sufficient strength and rigidity so as to be self-supportive and form-stable both during manufacture of the separator and during use in the battery.

Preferred base webs include a microporous, polyolefinic, homogeneous sheets formed by extrusion, such as is taught by U.S. Patent 3 351 495, which is incorporated herein by reference in its entirety. Another preferred base web is a synthetic paper formed of a synthetic polymeric pulp, various polymeric and/or glass fibers, an inorganic filler such as silica or diatomaceous earth and one or more staple long fibers, having a length of at least 0.65 cm and a dernier of about 1.5 to about 12. Such a base web and a method for making it is taught in U.S. Patents 4 216 281 and 4 265 985, which are incorporated herein by reference in their entireties. A more preferred base web is formed of a synthetic paper comprised of a small amount of synthetic pulp (1 to 20% by weight), from about 1 to about 20% by weight of a staple fiber, such as a polyester or polyethylene or acrylic fiber, from about 40 to 60% by weight of one or more glass fibers, and the remainder of the separator comprising an inorganic filler, such as silica and small amounts of alum and other retention aids such as cationic or anionic copolymers, including cationically or anionically modified high molecular weight polyacrylamides. The base web is formed according to the methods of U.S. Patents 4 216 281 and 4 265 985 and then preferably impregnated with a latex binder system which provides additional rigidity to the base web. Such binders are well known and can be formed of epoxy resins, phenolic resins, acrylic resins styrene based resins and blends thereof. A preferred binder is formed of a blend of a carboxylated polystyrene latex and a phenolic resin in about equal proportions (as measured by weight of solids). The amount of latex applied to and retained by the base web should be sufficient to increase rigidity, but less than that which may adversely affect the characteristics of the base web or the finished separator. Generally, about 3 to about 15% of the latex by weight of the base web should be retained in the base web.

Other materials, such as polyvinyl chloride sheets or phenolic aldehyde impregnated cellulosic sheets may also be used in forming the base web so long as they are stable in the lead/acid system and provide the required porosity and rigidty.

The glass mats may be formed of a commercially available glass mat, such as DURA-GLASS MAT available from by Manville. Alternatively and preferably, it is formed of a blend of one or more glass fibers, small amounts of a staple, long plastic fiber such as polyester, polyethylene or an acrylic fiber (1 to 15% by weight) and/or small amounts of synthetic pulp, such as polyethylene pulp (1 to 15% by weight). Preferably, two or more glass fibers are used, one relatively small in length and diameter and the other being a long fiber. The glass mat is formed by a wet paper making process as disclosed in U.S. Patents 4 216 281 and 4 265 985 and is then impregnated with a flexible latex, such as an acrylic latex and dried. This preferred glass mat has several advantages over the glass mat currently offered. It has a smaller average pore size, about 70 to 85 µm diameter (as compared to about 160 µm for commercially available mats) and it is not as brittle or inflexible as commercially available glass mats due to the use of the plastic and the latex binder. The processes of U.S. Patents 4 216 281 and 4 265 985 are particularly useful in forming this glass mat.

The glass mat should be essentially the same width as the base web to which it is bonded. In those instances where the separators are formed as separate pieces, the glass mat should also be the same height. It should have an average pore size of from about 40 to about 200 µm, preferably from about 75 to 100 µm, most preferably about 80 µm. The glass mat should be from about 125 to 1250 µm in thickness, preferably about 500 µm in thickness.

For manufacturing the separators according to the invention, conventional microporous separators as described above which generally display a porosity between 40 and 90 %, are coated on one side, preferably on the side facing the negative electrode with a liquid slurry comprising un-crosslinked rubber, silica and water, and are then dried. For better wettability of this layer, known wetting can be added to the slurry for use in lead batteries. After drying, a porous layer forms which adheres very well to the microporous separator and increases electrical resistance only insignificantly (approximately 50 mΩ·cm²); acid displacement likewise only increases by approximately 60 ml/m² separator surface.

A further embodiment of the present invention involves depositing the un-crosslinked rubber onto porous carrier materials by impregnation and drying (usually 20 to 60 g rubber/m²) and arranging this impregnated carrier on the side of the conventional microporous separator facing the negative electrode. For this, glass mats, fleeces or fabrics made from synthetic fibers (or mixtures with synthetic (fibers) or paper as described above can be used as carrier materials. Bonding can be carried out by compression or adhesion.

In another preferred embodiment the coating layer of un-crosslinked rubber is applied to one or both of the exposed surfaces of a separator. Preferably, it is applied to at least the side of the separator closest to the negative plate. More preferably, that side of the separator will be the exposed surface of the base web, i.e. the surface opposite that to which a glass mat may be attached. If desired, both the exposed surface of the base web and the exposed surface of the glass mat may have a coating layer.

Alternatively or additionally, the un-crosslinked coating layer may be applied to one or both major surfaces of the base web before the saturation with a latex binder, if used, or before the bonding of the glass mat. Likewise, the coating layer may be applied to the glass mat before it is bonded to the base web. Further, the coating layer may be applied to the base web after it has been saturated with the rigid latex binder, but before the bonding of the glass mat. Lastly, the coating may be applied during or subsequent to the application of the separately formed ribs, if used. As can be appreciated, the timing of the application and location of the coating layer is not critical to the present invention so long as it provides the desired top of charge and antimony poisoning properties and does not adversely affect the other characteristics of the separator or the battery.

The coating layer is preferably applied as a latex or a dispersion and then dried or cured upon the surface to which it is applied. Alternatively, one may form the coating layer as a microporous, form-stable, self-supporting sheet and attach it to the desired surface by various means such as by an adhesive along the adjourning outer edges, heat bonding, mechanical crimping or other mechanical means such as clips. Regardless of the manner in which the layer is applied, it must allow for electrolyte flow through its structure. The latex or dispersion is thus preferred as they tend to form a porous structure.

It is preferred that the coating layer be formed as a latex of natural rubber with typical well known dispersion aids and that the latex be applied to the desired surface by spraying, dipping or coating such that the natural rubber coating layer comprises from about 1 to about 10% by weight of the finished separator, preferably from about 1 to 5%, more preferably from about 2 to 4% by weight.

The separator may be formed by any means conventional for forming multilayered laminates of materials such as the following.

One preferred method of forming the separator is to separately form running lengths (e.g. multiple separator lengths) of the base web and glass mat layers, and apply an adhesive strip to the outer edges of the surface of base web to which the glass mat is to be bonded. The glass mat is then aligned with and bonded to the base web via the adhesive strips. The coating layer is then applied to at least the surface of the separator closest to the negative plate which preferably is the exposed surface of the base web. The application of the coating layer is preferably by a roll coater or spray nozzle such that a layer of about 0.5 to 4% of natural rubber by weight of the separator is applied. The separator is then cut to length.

Alternatively, pieces of base web and glass mat can be cut to a desired length, bonded together and then coated with the coating layer in a manner as set forth above.

Optionally, the base web/glass mat structure may be impregnated with a relatively stiff polymeric latex before the application of the coating layer. This latex tends to increase the stiffness of the finished separator which is desirable trait in such batteries. The polymeric latex can be selected from any relatively stiff polymer system including but not limited to styrene resins, epoxy resins, phenolic resins and mixtures thereof. A preferred latex is formed of equal proportions of a carboxylated polystyrene latex and a phenolic resin (based upon weight of solids).

Another preferred method of forming a separator is to coat at least one surface of the separator directly with an uncrosslinked rubber layer, preferably by a roll coater or spray nozzle such that a layer of about 0.5 to 4% of rubber by weight of the separator is applied. If desired, a glassmat may then be attached to the separator. Optionally, the coated separator may be used as is without any glassmat.

The finished separator thus has a positive plate engaging face, and a negative engaging face. It is preferred that the un-crosslinked rubber layer form the negative plate engaging face when arranged in a battery between a positive and a negative plate.

The separator has an overall thickness of from about 1 to about 3.75 mm, preferably about 1.5 to 2.5 mm. The average pore size for the finished separator should be less than 10 µm, preferably less than 5 µm and more preferably less than 3 µm.

Electrical resistance should be as low as possible, however, for deep cycle batteries, the level of electrical resistance need not be as low as that required for automobile starting batteries. Preferably the electrical resistance will be less than 390 mΩ·cm² (60 mΩ·inch²), more preferably less than 325 mΩ·cm² (50 mΩ·inch²).

Finally, sufficiently porous separators, e.g. glass-fiber separators can be impregnated with a rubber latex and subsequently dried.

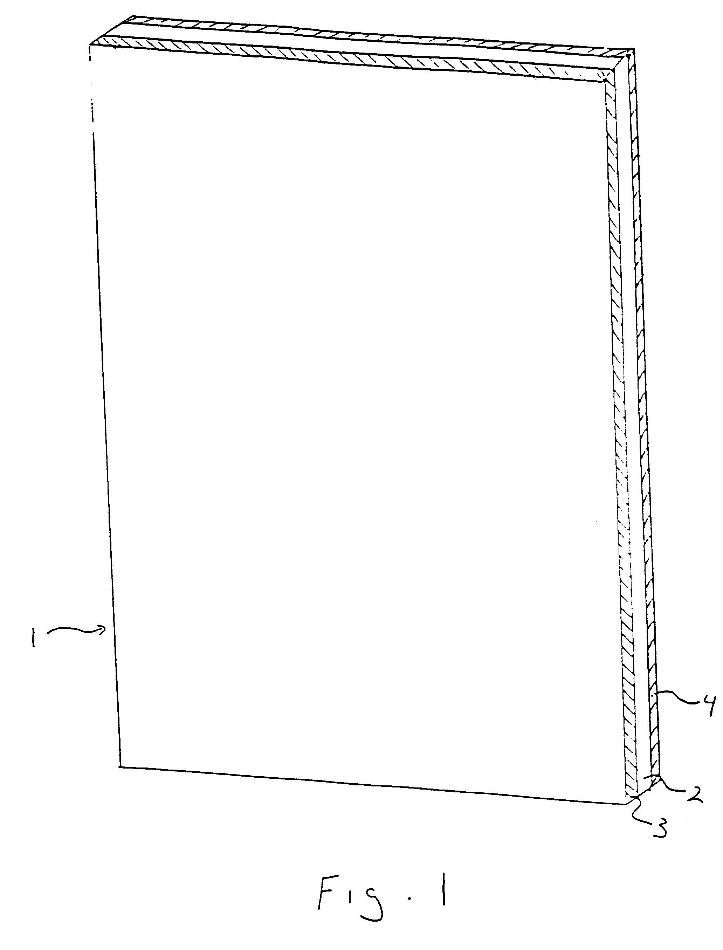

Figure 1 shows one embodiment of a battery separator made according to the present invention in a planar, partial cross sectional view:

The battery separator 1 is comprised of three layers, a base web 2, a glass mat 3 and a natural rubber coating 4 on the exposed surface of the base web 2. The glass mat and base web are bonded together, preferably at their respective outer margins. Suitable means for bonding include both sealing adhesives, various mechanical means, such as clips, or crimping and other means for bonding two layers together as are well known in the art.

The following examples serve to illustrate the invention.

### Example 1

To 77 g of a mixture comprising 23.7 wt-% silica (Akzo: Ketjensil SM 604 G), 2.4 wt-% cellulose fibers (Rettenmaier: Arbocell 60/30), 0.8 wt-% sodium alginate (Kelco International GmbH: Manutex RD) and 73.2 wt-% ion-exchanged water were added under stirring 23 g of a mixture comprising 90 wt-% natural latex milk (Weber & Schaer, Neotex 4/04), 8.75 wt-% of an aqueous 13.5 wt-% lauryl sulphate Na-salt solution and 1.25 wt-% of a standard commercial pigment (Colanyl N, Hoechst). The obtained paste was deposited with the aid of a coating knife in a thickness of approximately 0.4 mm onto the side of a microporous separator facing the negative electrode. The porous rubber SiO₂ coat was dried for 20 minutes at 110 °C. The dried coat contained approximately 50 g of natural rubber/m². In an accelerated life test, a separator manufactured in this way reached a cycle count of 150 cycles. In comparison, an uncoated separator achieved only approximately 70 cycles until failure.

### Example 2

A glass mat with a thickness of approximately 0.4 mm and a square metre weight of approximately 60 g, comprising 60 wt-% glass-fibers with a typical fiber diameter of 13 µm, 6 wt-% cellulose, 4 wt-% polyester fibers and 30 wt-% acrylate binder, was impregnated with a natural latex milk. The latex had a natural rubber content (dry rubber content, DRC) of approximately 60 wt-%. Using a pair of rubber steel rolls, excess latex was pressed out at a pressure of 0.24 kp/mm. The thus obtained still damp glass rubber mat contained, after drying for 5 minutes at approximately 120 °C, approximately 50 g rubber/m².

The glass rubber mat was bonded to a microporous DARAK® (Grace GmbH) separator on the side facing the negative electrode.

The thus manufactured separator was subjected to a DIN 43 539-03 battery cycle test. Whilst a battery with identical separators without impregnated glass rubber mat reached a pre-set degree of antimony poisoning (corresponding to 2.5 V final cell charging voltage) after approximately 600 cycles, 1200 cycles were measured for the separator with glass rubber mat according to the invention.

### Example 3

A web comprising glass-fibers, polyester fibers, silica and carboxyl group-containing polystyrene as binding agent was impregnated in a calandering process until saturation with an aqueous solution comprising the following:
2 wt-% of a carboxylated polystyrene latex
5 % non-ionic/anionic surfactants
15 wt-% phenolic resin
18 wt-% natural rubber latex.

Between 17 and 22 wt-% (relative to the web) of the solution constituents were absorbed by the fiber web.

The saturated web was subsequently dried and cured at 150°C.

### Example 4

A base web made according to the processes of the U.S. Patents 4 216 281 and 4 265 985 was formed from 31% of a 3 µm average diameter glass fiber, 20% of 1 µm average diameter glass fiber, 10% of polyester stable fiber, 0.64 cm long with a 16 µm average diameter, 28% of silica, 3% polyethylene pulp and 8% of a latex binder formed of equal amounts of carboxylated polystyrene and a phenolic resins (all amounts by weight of the base web).

A glass mat was formed of 40% by weight 2.5 µm average diameter glass fibers of random lengths 10% of 0.65 cm x 15 µm average diameter glass fiber, 15% of 1.27 cm by 15 µm average diameter glass fiber, 10% of 0.65 cm polyester staple fiber having a 1.5 dernier, 10% polyethylene pulp, 10% acrylic latex binder, 3% alum and 2% retention aid by the process of U.S. Patents 4 216 281 and 4 265 985 (all amounts by weight of the glass mat).

PVC plastisol ribs about 1016 µm in height were extruded onto one of the two major surfaces of the base web and cured. The glass mat was attached to the major surface of the base web by an acrylic adhesive applied to the tops of the ribs. The base web and glass mat combination was then saturated with latex formed of equal portions of a carboxylated polystyrene and a phenolic resin and dried at 150°C for about 20 minutes. The side of the separator having the exposed major surface of the base web, which in this embodiment would face the negative plate, was then sprayed with a diluted solution of natural rubber latex so as to deposit about 0.5 to 5% natural ruber (by weight of the separator) on the separator surface.

The separator had an overall thickness of 2.5 mm, an average pore size of 2.8 µm and an electrical resistance of 258 mΩ·cm² (40 mΩ·inch²).

The separator of the present invention has excellent characteristics and provides an improvement over existing separators in performance, ease of manufacture, cost and availability. Moreover, the use of the un-crosslinked natural rubber coating has been found to reduce the potential for antimony poisoning and to positively affect the Top of Charge behavior of the battery. Additionally, when a synthetic paper or a microporous extruded sheet is used as the base web, the rate and frequency of dendritic growth and its resulting shorting of the plates is substantially reduced.

## Claims

1. A lead/sulphuric acid storage battery with improved stability against antimony poisoning having negative and positive electrode plates, between which separators made of a material selected from the group comprising microporous plastics, glass-fibers, cellulosic sheets or a combination of microporous plastic or cellulosic sheets with glass fibers are arranged, said battery comprising a porous layer of un-crosslinked natural or un-crosslinked synthetic rubber which layer has a thickness of not less than 0.05 mm.

2. A battery according to claim 1, characterized in that the microporous plastic separators are provided with a layer comprising un-crosslinked natural or un-crosslinked synthetic rubber.

3. A battery according to claim 2, characterized in that the layer comprising un-crosslinked natural or un-crosslinked synthetic rubber has a thickness of 0.05 to 0.6 mm.

4. A battery according to claim 2 or 3, characterized in that the microporous plastic separators are provided on the side facing the negative electrode plate with a layer comprising un-crosslinked natural or un-crosslinked synthetic rubber.

5. A battery according to claim 1, characterized in that the microporous plastic separators are provided with a porous carrier layer comprising un-crosslinked natural or un-crosslinked synthetic rubber.

6. A battery according to claim 5, characterized in that the microporous plastic separators are provided, on the side facing the negative electrode plate, with a porous carrier layer comprising un-crosslinked natural or un-crosslinked synthetic rubber.

7. A battery according to claim 6, characterized in that the microporous plastic separators are provided, on the side facing the negative electrode plate, with a porous carrier layer of glass fibers impregnated with un-crosslinked natural or un-crosslinked synthetic rubber.

8. A battery according to claim 1, characterized in that the separators are made of a microporous plastic sheet material having two major surfaces, a glass mat layer adjacent one of the major surfaces of the sheet material and a coating of un-crosslinked natural or un-crosslinked synthetic rubber applied to either an outer surface of the glass mat, or the major surface adjacent the glass mat, or both.

9. A battery according to claim 8, characterized in that the base web and glass mat of the separator have been impregnated with an additional binder before application of the un-crosslinked natural or un-crosslinked synthetic rubber coating layer.

10. A battery according to claim 1, characterized in that un-crosslinked natural or un-crosslinked synthetic rubber is incorporated into the separator sheet.

11. A battery according to claim 1, characterized in that the un-crosslinked natural or un-crosslinked synthetic rubber is incorporated into the negative electrode plate.

12. A battery according to claim 1, characterized in that the un-crosslinked natural or un-crosslinked synthetic rubber is deposited as a coating onto the inner walls of the battery box.

13. A separator for use in a lead/sulphuric acid storage battery into which un-crosslinked natural or un-crosslinked synthetic rubber have been incorporated.

14. A separator according to claim 13, characterized in that the separator is provided with a layer comprising un-crosslinked natural or un-crosslinked synthetic rubber.

15. A separator according to claim 14, characterized in that the separator is provided with a layer comprising un-crosslinked natural or un-crosslinked synthetic rubber which layer has a thickness of 0.05 to 0.6 mm.

16. A separator according to claim 14, characterized in that the separator is provided on its side facing the negative electrode plate with a layer comprising un-crosslinked natural or un-crosslinked synthetic rubber.

17. A separator according to claim 13, characterized in that the separator is provided with a porous carrier layer comprising un-crosslinked natural or un-crosslinked synthetic rubber.

18. A separator according to claim 17, characterized in that it is provided, on the side facing the negative electrode plate, with a porous carrier layer of glass fibers impregnated with un-crosslinked natural or un-crosslinked synthetic rubber.

19. A separator according to claim 17, characterized in that the microporous separator is provided, on the side facing the negative electrode plate, with a porous carrier layer comprising un-crosslinked natural or un-crosslinked synthetic rubber.

20. A separator according to claim 13, characterized in that the it is made of a microporous plastic sheet material having two major surfaces, a glass mat layer adjacent one of the major surfaces of the sheet material and a coating of un-crosslinked natural or un-crosslinked synthetic rubber applied to either an outer surface of the glass mat, or the major surface adjacent the glass mat, or both.

21. A separator according to claim 20, characterized in that the base web and glass mat of the separator have been impregnated with an additional binder before application of the un-crosslinked natural or un-crosslinked synthetic rubber coating layer.

22. A separator according to claim 13, characterized in that un-crosslinked natural or un-crosslinked synthetic rubber is incorporated into the separator sheet.

## Patentansprüche

1. Blei/Schwefelsäure-Akkumulator mit verbesserter Stabilität gegenüber Antimonvergiftung aufweisend negative und positive Elektrodenplatten, zwischen denen Separatoren aus einem Material angeordnet sind, das aus der Gruppe enthaltend mikroporöse Kunststoffe, Glasfasern, Cellulosefolien oder eine Kombination aus mikroporösem Kunststoff oder Cellulosefolien mit Glasfasern ausgewählt ist, wobei der Akkumulator eine poröse Schicht aus unvernetztem natürlichem oder unvernetztem synthetischem Kautschuk enthält, wobei die Schicht eine Dicke von nicht weniger als 0,05 mm aufweist.

2. Akkumulator nach Anspruch 1, dadurch gekennzeichnet, daß die mikroporösen Kunststoff-Separatoren mit einer unvernetzten natürlichen oder unvernetzten synthetischen Kautschuk enthaltenden Schicht versehen sind.

3. Akkumulator nach Anspruch 2, dadurch gekennzeichnet, daß die unvernetzten natürlichen oder unvernetzten synthetischen Kautschuk enthaltende Schicht eine Dicke von 0,05 bis 0,6 mm aufweist.

4. Akkumulator nach Anspruch 2 oder 3, dadurch gekennzeichnet, daß die mikroporösen Kunststoff-Separatoren auf der der negativen Elektrodenplatte zugewandten Seite mit einer unvernetzten natürlichen oder unvernetzten synthetischen Kautschuk enthaltenden Schicht versehen sind.

5. Akkumulator nach Anspruch 1, dadurch gekennzeichnet, daß die mikroporösen Kunststoff-Separatoren mit einer porösen Trägerschicht versehen sind, welche unvernetzten natürlichen oder unvernetzten synthetischen Kautschuk enthält.

6. Akkumulator nach Anspruch 5, dadurch gekennzeichnet, daß die mikroporösen Kunststoff-Separatoren auf der der negativen Elektrodenplatte zugewandten Seite mit einer porösen Trägerschicht versehen sind, welche unvernetzten natürlichen oder unvernetzten synthetischen Kautschuk enthält.

7. Akkumulator nach Anspruch 6, dadurch gekennzeichnet, daß die mikroporösen Kunststoff-Separatoren auf der der negativen Elektrodenplatte zugewandten Seite mit einer porösen Trägerschicht aus Glasfasern versehen sind, welche mit unvernetztem natürlichem oder unvernetztem synthetischem Kautschuk imprägniert ist.

8. Akkumulator nach Anspruch 1, dadurch gekennzeichnet, daß die Separatoren aus eimem mikroporösen Kunststoffolienmaterial, das zwei Hauptoberflächen aufweist, einer Glasmattenschicht, die zu einer der Hauptoberflächen des Folienmaterials benachbart ist, und einer Beschichtung aus unvernetztem natürlichem oder unvernetztem synthetischem Kautschuk, die entweder auf eine äußere Oberfläche der Glasmatte oder die zur Glasmatte benachbarte Hauptoberfläche oder beide aufgebracht ist, hergestellt sind.

9. Akkumulator nach Anspruch 8, dadurch gekennzeichnet, daß das Basisgewebe und die Glasmatte des Separators vor dem Aufbringen der unvernetzten natürlichen oder unvernetzten synthetischen Kautschukdeckschicht mit einem zusätzlichen Bindemittel imprägniert worden sind.

10. Akkumulator nach Anspruch 1, dadurch gekennzeichnet, daß der unvernetzte natürliche oder unvernetzte synthetische Kautschuk in das Separatorblatt eingearbeitet ist.

11. Akkumulator nach Anspruch 1, dadurch gekennzeichnet, daß der unvernetzte natürliche oder unvernetzte synthetische Kautschuk in die negative Elektrodenplatte eingearbeitet ist.

12. Akkumulator nach Anspruch 1, dadurch gekennzeichnet, daß der unvernetzte natürliche oder unvernetzte synthetische Kautschuk als Beschichtung auf die Innenwände des Akkumulator-Kastens aufgebracht ist.

13. Separator zur Verwendung in einem Blei/Schwefelsäure-Akkumulator in den unvernetzter natürlicher oder unvernetzter synthetischer Kautschuk eingearbeitet ist.

14. Separator nach Anspruch 13, dadurch gekennzeichnet, daß der Separator mit einer Schicht versehen ist, welche unvernetzten natürlichen oder unvernetzten synthetischen Kautschuk enthält.

15. Separator nach Anspruch 14, dadurch gekennzeichnet, daß der Separator mit einer Schicht versehen ist, welche unvernetzten natürlichen oder unvernetzten synthetischen Kautschuk enthält, wobei die Schicht eine Dicke von 0,05 bis 0,6 mm aufweist.

16. Separator nach Anspruch 14, dadurch gekennzeichnet, daß der Separator auf der der negativen Elektrodenplatte zugewandten Seite mit einer Schicht versehen ist, welche unvernetzten natürlichen oder unvernetzten synthetischen Kautschuk enthält.

17. Separator nach Anspruch 13, dadurch gekennzeichnet, daß der Separator mit einer porösen Trägerschicht versehen ist, welche unvernetzten natürlichen oder unvernetzten synthetischen Kautschuk enthält.

18. Separator nach Anspruch 17, dadurch gekennzeichnet, daß er auf der der negativen Elektrodenplatte zugewandten Seite mit einer porösen Trägerschicht aus Glasfasern versehen ist, welche mit unvernetztem natürlichem oder unvernetztem synthetischem Kautschuk imprägniert ist.

19. Separator nach Anspruch 17, dadurch gekennzeichnet, daß der mikroporöse Separator auf der der negativen Elektrodenplatte zugewandten Seite mit einer porösen Trägerschicht versehen ist, welche unvernetzten natürlichen oder unvernetzten synthetischen Kautschuk enthält.

20. Separator nach Anspruch 13, dadurch gekennzeichnet, daß er aus eimem mikroporösen Kunststoffolienmaterial, das zwei Hauptoberflächen aufweist, einer Glasmattenschicht, die zu einer der Hauptoberflächen des Folienmaterials benachbart ist, und einer Beschichtung aus unvernetztem natürlichem oder unvernetztem synthetischem Kautschuk, die entweder auf eine äußere Oberfläche der Glasmatte oder die zur Glasmatte benachbarte Hauptoberfläche oder beide aufgebracht ist, hergestellt ist.

21. Separator nach Anspruch 20, dadurch gekennzeichnet, daß das Basisgewebe und die Glasmatte des Separators vor dem Aufbringen der unvernetzten natürlichen oder unvernetzten synthetischen Kautschukdeckschicht mit einem zusätzlichen Bindemittel imprägniert worden sind.

22. Separator nach Anspruch 13, dadurch gekennzeichnet, daß der unvernetzte natürliche oder unvernetzte synthetische Kautschuk in das Separatorblatt eingearbeitet ist.

## Revendications

1. Accumulateur au plomb/acide sulfurique possédant une meilleure stabilité à l'encontre de l'empoisonnement par l'antimoine et possédant des plaques électrodes négatives et positives entre lesquelles sont interposés des séparateurs faits d'une matière choisie dans le groupe comprenant les matières plastiques microporeuses, les fibres de verre, les feuilles cellulosiques et une combinaison d'une matière plastique microporeuse ou de feuilles cellulosiques avec des fibres de verre, ledit accumulateur comprenant une couche poreuse de caoutchouc naturel non réticulé ou synthétique non réticulé, laquelle couche a une épaisseur non inférieure à 0,05 mm.

2. Accumulateur selon la revendication 1, caractérisé en ce que les séparateurs en matière plastique microporeuse sont munis d'une couche comprenant du caoutchouc naturel non réticulé ou synthétique non réticulé.

3. Accumulateur selon la revendication 2, caractérisé en ce que la couche comprenant du caoutchouc naturel non réticulé ou synthétique non réticulé a une épaisseur de 0,05 à 0,6 mm.

4. Accumulateur selon la revendication 2 ou 3, caractérisé en ce que les séparateurs en matière plastique microporeuse sont munis sur la face qui est en regard de la plaque électrode négative d'une couche comprenant du caoutchouc naturel non réticulé ou synthétique non réticulé.

5. Accumulateur selon la revendication 1, caractérisé en ce que les séparateurs en matière plastique microporeuse sont munis d'une couche de support poreuse comprenant du caoutchouc naturel non réticulé ou synthétique non réticulé.

6. Accumulateur selon la revendication 5, caractérisé en ce que les séparateurs en matière plastique microporeuse sont munis, sur la face qui est en regard de la plaque électrode négative, d'une couche de support poreuse comprenant du caoutchouc naturel non réticulé ou synthétique non réticulé.

7. Accumulateur selon la revendication 6, caractérisé en ce que les séparateurs en matière plastique microporeuse sont munis, sur la face en regard de la plaque électrode négative, d'une couche de support poreuse faite de fibres de verre imprégnées de caoutchouc naturel non réticulé ou synthétique non réticulé.

8. Accumulateur selon la revendication 1, caractérisé en ce que les séparateurs sont faits d'une matière en feuille de matière plastique microporeuse ayant deux grandes surfaces, d'une couche de nappe de verre adjacente à l'une des grandes surfaces de la matière en feuille et d'un revêtement de caoutchouc naturel non réticulé ou synthétique non réticulé appliqué, soit à une surface extérieure de la nappe de verre, soit à la grande surface adjacente à la nappe de verre, soit à chacune de ces deux surfaces.

9. Accumulateur selon la revendication 8, caractérisé en ce que la bande de base et la nappe de verre du séparateur ont été imprégnées d'un liant additionnel avant l'application de la couche de revêtement en caoutchouc naturel non réticulé ou synthétique non réticulé.

10. Accumulateur selon la revendication 1, caractérisé en ce que du caoutchouc naturel non réticulé ou synthétique non réticulé est incorporé dans la feuille du séparateur.

11. Accumulateur selon la revendication 1, caractérisé en ce que du caoutchouc naturel non réticulé ou synthétique non réticulé est incorporé dans la plaque électrode négative.

12. Accumulateur selon la revendication 1, caractérisé en ce que le caoutchouc naturel non réticulé ou synthétique non réticulé est déposé sous la forme d'une enduction sur les parois intérieures du bac de l'accumulateur.

13. Séparateur destiné à être utilisé dans un accumulateur au plomb/acide sulfurique, dans lequel un caoutchouc naturel non réticulé ou synthétique non réticulé a été incorporé.

14. Séparateur selon la revendication 13, caractérisé en ce que le séparateur est muni d'une couche comprenant un caoutchouc naturel non réticulé ou synthétique non réticulé.

15. Séparateur selon la revendication 14, caractérisé en ce que le séparateur est muni d'une couche comprenant du caoutchouc naturel non réticulé ou synthétique non réticulé, laquelle couche a une épaisseur de 0,05 à 0,6 mm.

16. Séparateur selon la revendication 14, caractérisé en ce que le séparateur est muni, sur sa face en regard de la plaque électrode négative, d'une couche comprenant du caoutchouc naturel non réticulé ou synthétique non réticulé.

17. Séparateur selon la revendication 13, caractérisé en ce que le séparateur est muni d'une couche de support poreuse comprenant du caoutchouc naturel non réticulé ou synthétique non réticulé.

18. Séparateur selon la revendication 17, caractérisé en ce qu'il est muni, sur la face en regard de la plaque électrode négative, d'une couche de support poreuse de fibres de verre imprégnée de caoutchouc naturel non réticulé ou synthétique non réticulé.

19. Séparateur selon la revendication 17, caractérisé en ce que le séparateur microporeux est muni, sur la face en regard de la plaque électrode négative, d'une couche de support poreuse comprenant du caoutchouc naturel non réticulé ou synthétique non réticulé.

20. Séparateur selon la revendication 13, caractérisé en ce qu'il est fait d'une matière en feuille de matière plastique microporeuse ayant deux grandes surfaces, d'une couche de nappe de verre adjacente à une des grandes surfaces de la matière en feuille et d'un revêtement de caoutchouc naturel non réticulé ou synthétique non réticulé appliqué, soit à une surface extérieure de la nappe de verre, soit à la grande surface adjacente à la nappe de verre, soit aux deux.

21. Séparateur selon la revendication 20, caractérisé en ce que la bande de base et la nappe de verre du séparateur ont été imprégnées d'un liant additionnel avant l'application de la couche de revêtement en caoutchouc naturel non réticulé ou synthétique non réticulé.

22. Séparateur selon la revendication 13, caractérisé en ce que le caoutchouc naturel non réticulé ou synthétique non réticulé est incorporé dans la feuille du séparateur.
